# EUROPÄISCHE PATENTSCHRIFT

(11) **EP 1 970 589 B1**
(45) Veröffentlichungstag und Bekanntmachung des Hinweises auf die Patenterteilung: **08.06.2011**
(21) Anmeldenummer: 08002920.0
(22) Anmeldetag: 18.02.2008
(51) Int. Cl.: F16D 25/08

(54) **Nehmerzylinder**
Slave cylinder
Cylindre récepteur

(30) Priorität: 12.03.2007 DE 102007011778
(43) Veröffentlichungstag der Anmeldung: 17.09.2008
(73) Patentinhaber: Schaeffler Technologies GmbH & Co. KG, 91074 Herzogenaurach (DE)
(72) Erfinder: Rammhofer, Thomas, 77880 Sasbach (DE); Altmeppen, Berthold, 77830 Bühlertal (DE)

(56) Entgegenhaltungen:
- WO-A-2005/045271
- DE-A1- 19 755 494
- US-A1- 2002 050 686

## Beschreibung

Die vorliegende Erfindung betrifft einen Nehmerzylinder für ein hydraulisches Ausrücksystem einer Reibungskupplung von Fahrzeugen nach dem Oberbegriff des Anspruchs 1.

Ein gattungsgemäßer Nehmerzylinder ist beispielsweise in der DE 196 81 324 A1 offenbart.

Ein weiterer Nehmerzylinder ist aus DE 197 55 494 A1 bekannt.

Bei derartigen Nehmerzylindern kann die Dichtung zwischen Ringkolben und Druckraum durch Spaltextrusion abgenutzt oder beschädigt werden. Bei der Spaltextrusion werden Teile der Dichtung in einen Spalt zwischen Ringkolben und Nehmerzylindergehäuse bzw. Ringkolben und Führungshülse gepresst.

Eine Aufgabe der vorliegenden Erfindung ist es daher, die Spaltextrusion zu verringern.

Diese Aufgabe wird gelöst durch einen Nehmerzylinder für ein hydraulisches Ausrücksystem einer Reibungskupplung von Fahrzeugen, wobei der Nehmerzylinder ein Nehmerzylindergehäuse aufweist, das konzentrisch zu einer Getriebeeingangswelle angeordnet ist, wobei eine Führungshülse in einer Längsbohrung des Druckgehäuses radial beabstandet zur Bildung eines kreisringförmigen Druckraums angeordnet ist und im Druckraum ein Ringkolben axial verschiebbar geführt ist, der druckraumseitig mit einer Dichtung versehen ist, deren Dichtlippen gespreizt, insbesondere V-förmig radial gespreizt, angeordnet sind, wobei der Ringkolben mindestens einen Bereich aufweist, der bei Druckbeaufschlagung des Druckraumes einen Ringspalt zwischen Ringkolben und Gehäuse und/oder einen Ringspalt zwischen Ringkolben und Führungshülse verkleinert. Die Dichtung ist dazu so an dem Ringkolben angeordnet, dass der Druck in dem Druckraum den dem Druckraum zugewandten Teil des Ringkolbens in radialer Richtung spreizt, sodass der Ringspalt zwischen Ringkolben und Nehmerzylindergehäuse bzw. Führungshülse durch Aufweiten des Ringkolbens zugedrückt wird. Vorzugsweise umfasst der Ringkolben einen Kolbenkörper sowie einen mit diesem verbundenen Dichtungsträger zur Aufnahme der Dichtung, wobei der Bereich, der bei Druckbeaufschlagung des Druckraumes den Ringspalt zwischen Kolben und Gehäuse und/oder den Ringspalt zwischen Kolben und Führungshülse verringert, an dem Dichtungsträger angeordnet ist. Der Dichtungsträger ist vorzugsweise formschlüssig, insbesondere mittels einer Clipsverbindung, mit dem Kolbenkörper verbunden. Dabei ist die Verbindung zwischen Dichtungsträger und Kolbenkörper bevorzugt axial und/oder radial spielbehaftet. Die Dichtung umfasst bevorzugt einen Dichtungsteil, der in einer Dichtungsaufnahme des Dichtungsträgers aufgenommen ist. Der Dichtungsteil wird bei Druckbeaufschlagung des Druckraumes gestaucht und in radialer Richtung mit einer Druckkraft beaufschlagt. Die radiale Druckkraft spreizt den die Dichtung in diesem Bereich umschließenden Teil des Dichtungsträgers bzw. des Kolbenkörpers, wenn die Dichtung direkt an diesem unter Verzicht auf einen Dichtungsträger befestigt ist. Vorzugsweise umfasst der Dichtungsteil einen Dichtungsfuß mit Mitteln zur Festlegung der Dichtung an dem Dichtungsträger. Dies kann eine Kombination aus umlaufenden Nuten und korrespondierenden Hinterschneidungen sein. Der Dichtungsteil umfasst bevorzugt einen Dichtungsrücken mit zwei im Wesentlichen axial verlaufenden Flächen. Der Dichtungsrücken ist von einer Dichtungsaufnahme des Dichtungsträgers bzw. Kolbenkörpers radial eingefasst, sodass dieser keinen Kontakt mit dem Nehmerzylindergehäuse bzw. der Führungshülse hat. Zusätzlich sorgt der Dichtungsrücken durch seine axiale Länge dafür, dass eine relativ hohe radiale Druckkraft auf den Dichtungsträger im vorderen Bereich der Dichtungsaufnahme bei Druckbeaufschlagung des Druckraumes ausgeübt wird. Der Dichtungsträger umfasst vorzugsweise in dem Bereich, der den Dichtungsrücken aufnimmt, eine Armierung. Diese kann beispielsweise als Stahlring oder Glasfasereinlage als Ring ausgebildet sein. Dabei können ein Ring oder mehrere Ringe vorgesehen sein, diese können radial innerhalb des Dichtungsteils in dem Dichtungsträger angeordnet sein oder den Dichtungsteil radial außerhalb umfassen.

Im Folgenden werden Ausführungsbeispiele der Erfindung anhand der beiliegenden Zeichnungen erläutert. Dabei zeigen:
- Fig. 1: einen Teilausschnitt aus einem Nehmerzylinder;
- Fig. 2: den Dichtungsträger gemäß Fig. 1 allein im Schnitt;
- Fig. 3: die Dichtung gemäß Fig. 1 allein im Schnitt.

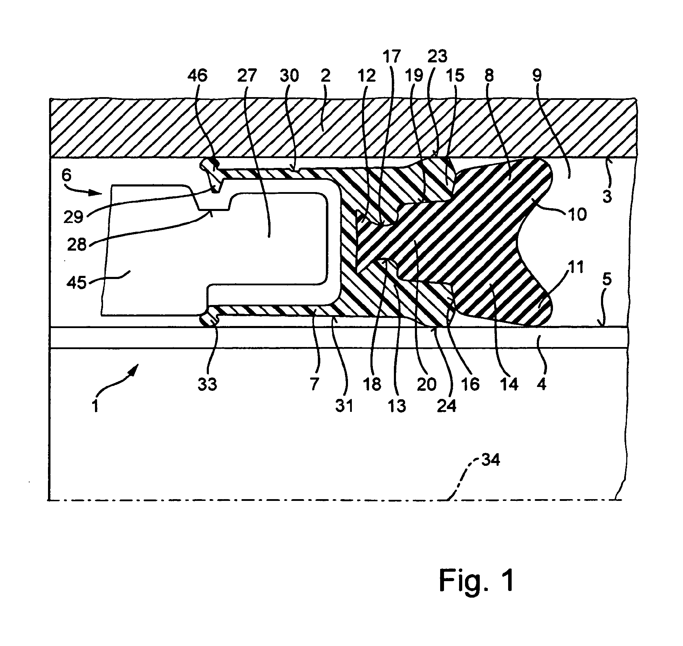

Fig. 1 zeigt einen Teilausschnitt aus einem Nehmerzylinder 1 in einem Teilschnitt. Dieser umfasst ein Nehmerzylindergehäuse 2 mit einer im Wesentlichen zylindrischen Innenfläche 3 sowie eine Führungshülse 4 mit einer ebenfalls zylindrischen Außenfläche 5. Zwischen der Innenfläche 3 des Nehmerzylindergehäuses 2 und der Außenfläche 5 der Führungshülse 4 wird ein Ringraum eingeschlossen, in dem ein Ringkolben 6 angeordnet ist. Der Ringkolben 6 umfasst einen Kolbenkörper 45 sowie einen Dichtungsträger 7, der eine Dichtung 8 trägt. In alternativen Ausführungsformen der Erfindung ist die Dichtung 8 unmittelbar -also unter Verzicht auf einen Dichtungsträger 7 als eigenständiges Beuteil- an dem Kolbenkörper 45 angeordnet. Die Dichtung schließt zusammen mit dem Nehmerzylindergehäuse 2 sowie der Führungshülse 4 einen Druckraum 9 ein. Die der Dichtung 8 gegenüberliegende Begrenzung des Druckraumes 9 sowie eine hydraulische Zuleitung des Nehmerzylinders 1 sind nicht dargestellt. Der Nehmerzylinder ist konzentrisch um eine Getriebeeingangswelle angeordnet, die in Fig. 1 nur schematisch anhand einer Rotationsachse 34 der Getriebeeingangswelle dargestellt ist.

Die Dichtung 8 ist eine Lippendichtung mit einer äußeren Lippe 10 und einer inneren Lippe 11, die V-förmig radial gespreizt zueinander angeordnet sind. Die Dichtung 8 umfasst einen Dichtungsfuß 12 sowie einen Dichtungsrücken 20, die in eine korrespondierende Dichtungsaufnahme 13 des Dichtungsträgers 7 eingreifen. Der Dichtungsfuß 12 und der Dichtungsrücken 20 bilden zusammen einen Dichtungsteil 47, der in radialer Richtung nach außen sowie innen von der Dichtungsaufnahme 13 umschlossen ist. Die Dichtlippen 10, 11 sind im Bereich eines Dichtungskörpers 14 angeordnet. Beim Übergang vom Dichtungskörper 14 auf den Dichtungsfuß 12 weist die Dichtung eine äußere im Wesentlichen radial (also nur leicht schräg in axialer Richtung verlaufend) zur Bewegungsrichtung des Ringkolbens 6 verlaufende äußere Stützfläche 15 und entsprechend eine ebenfalls im Wesentlichen radial verlaufende innere Stützfläche 16 auf. Der Dichtungsfuß 12 umfasst eine äußere Ringnut 17 und eine innere Ringnut 18, in die korrespondierende Hinterschneidungen 37, 38 des Dichtungsträgers 7 eingreifen. Die Dichtung 8 wird so formschlüssig mit dem Dichtungsträger 7 verbunden. Die Dichtung 8 weist mit den im Wesentlichen radial verlaufenden Stützflächen 15, 16 sowohl an der radial äußeren als auch an der radial inneren Seite jeweils Stufen auf, diese sind in Fig. 1 mit S1 und S2 bezeichnet. Durch die Stufen S1 und S2 sind verschleißintensive Bereiche am Außen- und Innendurchmesser des Dichtungsfußes 12 ausgespart und in diesem Bereich durch Material des Dichtungsträgers 7 angefüllt. Der Dichtungsträger 7 umgreift damit den Dichtungsfuß 12 sowie den Dichtungsrücken wie unten dargestellt teilweise und reduziert die Kontaktfläche der Dichtung 8 zur Innenfläche 3 und Außenfläche 5. Dadurch wird die Reibung zwischen der Dichtung 8 und der Innenfläche 3 bzw. Außenfläche 5 reduziert und somit der Verschleiß der Dichtung verringert.

Der Dichtungsrücken 20 hat einen im Wesentlichen rechteckigen Querschnitt. Der Dichtungskörper 14 hat in dem Bereich, in dem dieser von dem Dichtungsträger 7 eingefasst ist, ebenfalls einen nahezu rechteckigen Querschnitt. Die Übergänge der rechteckigen Querschnitte des Dichtungsrückens 20 zum Dichtungskörper 14 sind jeweils abgerundet um Spannungsspitzen zu vermeiden. Gleiches gilt für den Dichtungsträger 7, bei dem Übergänge zu verschiedenen Radien ebenfalls abgerundet sind um Spannungsspitzen zu vermeiden. Beispielsweise sind die mit den Bezugszeichen 21 und 22 bezeichneten Übergänge, hier geht bei der Dichtung 8 der Dichtungsrücken 20 in den Dichtungskörper 14 über und entsprechend liegt eine stufenartige Erhöhung bzw. Verminderung der Innen- bzw. Außendurchmesser des Dichtungsträgers 7 vor, zwei korrespondierende Abrundungen des Dichtungsträgers 7 und der Dichtung 8. Bedingt durch diese Form verändert sich die Auflagefläche der Dichtung auch bei Verschleiß der Oberfläche des Dichtungsträgers nicht. Die Dichtung 8 wird mittels des Dichtungsfußes 12 formschlüssig mit dem Dichtungsträger 7 verbunden. Die Dichtung 8 ist aus einem Elastomer, vorzugsweise EPDM oder HNBR, gefertigt. Vorzugsweise ist der Dichtringträger 7 aus einem thermoplastischen Kunststoff gefertigt. Alternativ kann der Dichtringträger aus einem verstärkten Polyamid, beispielsweise Polyamid 66 oder Polyamid 46, oder einem unverstärkten Polyamid bestehen. Der Werkstoff des Dichtringträgers 7 kann einen Zusatz von reibungsmindernden Komponenten, beispielsweise PTFE, Graphit oder dergleichen enthalten.

Der Dichtungsträger 7 weist eine Armierung 25 in Form eines unter Druck elastischen und insbesondere in radialer Richtung verformbaren Werkstoffes, zum Beispiel einer Glasfaserverstärkung oder eines Stahlringes, auf, der im Bereich des Außenumfangs oder des Innenumfangs des Dichtungsrückens 20 angeordnet ist. Die Armierung ist in Fig. 1 mit dem Bezugszeichen von 25 gekennzeichnet. Hier ist entweder eine radial äußere Armierung 25.1 oder eine radial innere Armierung 25.2 vorgesehen, alternativ können auch beide Armierungen in dem Dichtungsträger 7 angeordnet sein oder es kann auf beide verzichtet werden. Ein Ringspalt 23 zwischen dem Dichtungsträger 7 und dem Nehmerzylindergehäuse 2 bzw. ein Ringspalt 24 zwischen dem Dichtungsträger 7 und der Führungshülse 4 verringert sich bei unter Druck stehendem Druckraum 9. Die Ringspalte können dabei bis auf Null verringert werden. Eine Spaltextrusion der Dichtung 7 wird dadurch vermieden. Der Dichtungsträger 7 kann einteilig oder zweiteilig ausgeführt sein. Der Dichtungsträger 7 und die Dichtung 8 sind getrennt herstellbar.

Der Dichtungsträger 7 weist eine axial eingebrachte Aufnahmenut 26 zur Befestigung an dem Kolbenkörper 45 auf. Der Kolbenkörper 45 umfasst dazu einen umlaufenden Befestigungsring 27 mit einer umlaufenden Ringnut 28, in die ein umlaufender Absatz 29 des Dichtungsträgers 7 eingreift. Der Dichtungsträger 7 ist so mit axialem und radialem Spiel an Ringkolben 6 befestigt.

Der Absatz 29 bildet mit der Ringnut 28 eine Clipsverbindung. Der Dichtungsträger 7 hat an seiner Oberfläche ein Profil. Eine äußere Aussparung 30 und eine innere Aussparung 31 bilden jeweils Hohlräume zur Mitnahme von Hydraulikfluid als Schmierstoff. Der Absatz 29 weist eine Einbauschräge 32 zur leichteren Montage des Dichtungsträgers 7 mit dem Ringkolben 6 auf. An dem Dichtungsträger 7 sind ein äußerer Abstreifring 46 und ein innerer Abstreifring 34 angeordnet. Die Abstreifringe 34, 46 sind Bereiche des Dichtungsträgers 7, die mit relativ geringem Spiel an den jeweiligen Gleitflächen anliegen.

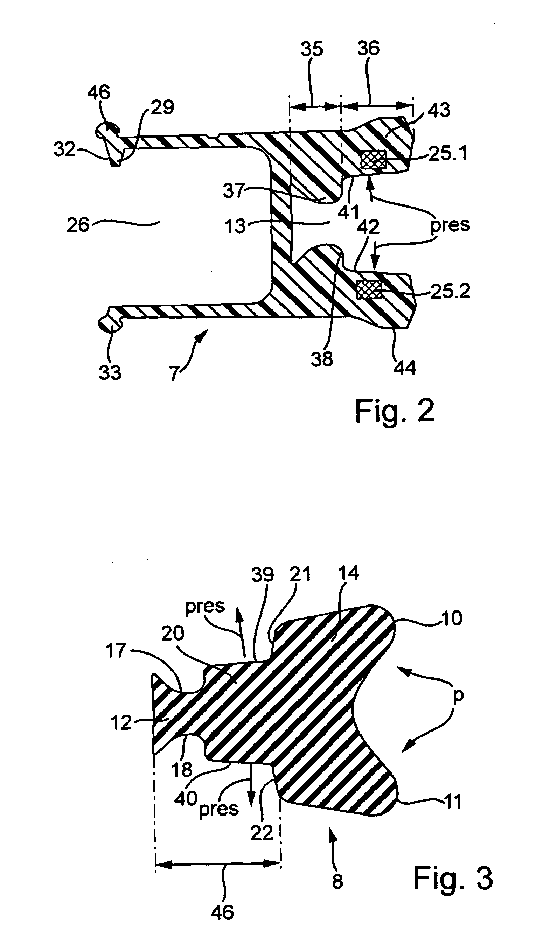

Fig. 2 zeigt den Dichtungsträger 7 in einem Schnitt entsprechend der Darstellung der Fig. 1 einzeln. Die Dichtungsaufnahme 13 umfasst einen hinteren Bereich 35 und einen vorderen Bereich 36. Die äußere Hinterschneidung 37 und die innere Hinterschneidung 38 dienen der Festlegung des Dichtungsfußes 12. In Einbaulage liegt die Dichtung 8 mit dem Dichtungsrücken 20 an den axial verlaufenden Flächen 46 und 47 des vorderen Bereiches 36 des Dichtungsträgers 7 an. Die Dichtung 8, diese ist in Fig. 3 in einen Schnitt entsprechend der Darstellung der Figuren 1 und 2 einzeln dargestellt, liegt mit einer äußeren axialen Fläche 39 an einer äußeren axialen Flächen 41 des vorderen Bereichs 36 und einer inneren axialen Fläche 40 an einer inneren axialen Fläche 42 des vorderen Bereichs 36 an. Wird der Druckraum 9 mit einem Druck p beaufschlagt, so wirkt diese Druckkraft auch auf die dem Raum 9 zugewandten Flächen der Dichtung 8. Die Druckkraft p ist in Fig. 3 mit zwei Pfeilen p gekennzeichnet. Aus der Druckkraft p resultiert eine senkrecht zu den Flächen 39 und 40 bzw. 41 und 42 verlaufende Druckkraft bzw. Flächenpressung pres. Diese bewirkt, dass der vordere Bereich 36 in Pfeilrichtung der resultierenden Flächenpressung pres auseinandergedrückt wird. Dadurch wird eine vordere äußere Dichtfläche 43 des Dichtungsträgers 7 auf die Innenfläche 3 gedrückt, so dass der Dichtungsträger 7 in diesem Bereich elastisch verformt wird und der Ringspalt 23 verkleinert wird und eine vordere innere Dichtfläche 44 des Dichtungsträgers 7 auf die Außenfläche 5 der Führungshülse 4 gepresst, so dass der Dichtungsträger 7 in diesem Bereich elastisch verformt wird und der Ringspalt 24 verringert wird. Durch die Verringerung der Ringspalte 23, 24 (abhängig vom Druck p in dem Druckraum 9 können diese bis auf Null verringert werden) wird eine Spaltextrusion der Dichtung 8 in die Ringspalte 23, 24 vermieden. Das zuvor dargestellte Ausführungsbeispiel wurde dargestellt anhand eines Rinkolbens mit einem Kolbenkörper 45 und einem Dichtungsträger 7. Selbstverständlich kann die Erfindung auch angewandt werden wenn die Dichtung direkt mit dem Kolbenkörper der Ringkolbens unter Verzicht auf einen Dichtungsträger angeordnet ist.

### Bezugszeichenliste

- 1: Nehmerzylinder
- 2: Nehmerzylindergehäuse
- 3: Innenfläche
- 4: Führungshülse
- 5: Außenfläche
- 6: Ringkolben
- 7: Dichtungsträger
- 8: Dichtung
- 9: Druckraum
- 10: Äußere Lippe
- 11: Innere Lippe
- 12: Dichtungsfuß
- 13: Dichtungsaufnahme
- 14: Dichtungskörper
- 15: Äußere Stützfläche
- 16: Innere Stützfläche
- 17: Äußere Ringnut
- 18: Innere Ringnut
- 19: Fläche mit großem Verschleiß
- 20: Dichtungsrücken
- 21: Übergang
- 22: Übergang
- 23: Ringspalt
- 24: Ringspalt
- 25.1, 25.2: Armierung
- 26: Aufnahmenut
- 27: Befestigungsring
- 28: Ringnut
- 29: Absatz
- 30: Aussparung
- 31: Aussparung
- 32: Einbauschräge
- 33: Abstreifring
- 34: Rotationsachse Getriebeeingangswelle
- 35: Hinterer Bereich
- 36: Vorderer bereich
- 37: Hinterschneidung
- 38: Hinterschneidung
- 39: Äußere axiale Fläche
- 40: Innere axiale Fläche
- 41: Äußere axiale Fläche
- 42: Innere axiale Fläche
- 43: vordere äußere Dichtfläche
- 44: vordere innere Dichtfläche
- 45: Kolbenkörper
- 46: Abstreifring
- 47: Dichtungsteil

## Patentansprüche

1. Nehmerzylinder für ein hydraulisches Ausrücksystem einer Reibungskupplung von Fahrzeugen, wobei der Nehmerzylinder ein Nehmerzylindergehäuse (2) aufweist, das konzentrisch zu einer Getriebeeingangswelle (34) angeordnet ist, wobei eine Führungshülse (5) in einer Längsbohrung des Druckgehäuses (2) radial beabstandet zur Bildung eines kreisringförmigen Druckraums (9) angeordnet ist und im Druckraum (9) ein Ringkolben (6) axial verschiebbar geführt ist, der druckraumseitig mit einer Dichtung (8) versehen ist, deren Dichtlippen (10, 11) radial gespreizt angeordnet sind, **dadurch gekennzeichnet, dass** der Ringkolben (6) mindestens einen Bereich (36) aufweist, der bei Druckbeaufschlagung des Druckraumes (9) einen Ringspalt (23) zwischen Ringkolben (6) und Gehäuse und/oder einen Ringspalt (24) zwischen Ringkolben (6) und Führungshülse verkleinert.

2. Nehmerzylinder nach Anspruch 1, **dadurch gekennzeichnet, dass** der Ringkolben (6) einen Kolbenkörper (45) sowie einen mit diesem verbundenen Dichtungsträger (7) zur Aufnahme der Dichtung (8) umfasst, wobei der Bereich, der bei Druckbeaufschlagung des Druckraumes den Ringspalt (23) zwischen Kolben und Gehäuse und/oderden Ringspalt (24) zwischen Kolben und Führungshülse verringert, an dem Dichtungsträger (7) angeordnet ist.

3. Nehmerzylinder nach Anspruch 2, **dadurch gekennzeichnet, dass** Dichtungsträger (7) formschlüssig, insbesondere mittels einer Clipsverbindung, mit dem Kolbenkörper (45) verbunden ist.

4. Nehmerzylinder nach Anspruch 3, **dadurch gekennzeichnet, dass** die Verbindung zwischen Dichtungsträger (7) und Kolbenkörper (45) axial und/oder radial spielbehaftet ist.

5. Nehmerzylinder nach einem der vorhergehenden Ansprüche, **dadurch gekennzeichnet, dass** die Dichtung (8) einen Dichtungsteil (47) umfasst, der in einer Dichtungsaufnahme (13) des Dichtungsträgers aufgenommen ist.

6. Nehmerzylinder nach Anspruch 3, **dadurch gekennzeichnet, dass** der Dichtungsteil (47) einen Dichtungsfuß (13) mit Mitteln zur Festlegung der Dichtung an dem Dichtungsträger (7) umfasst.

7. Nehmerzylinder nach Anspruch 5 oder 6, **dadurch gekennzeichnet, dass** der Dichtungsteil (47) einen Dichtungsrücken (20) mit zwei im Wesentlichen axial verlaufenden Flächen (39, 40) umfasst.

8. Nehmerzylinder nach einem der vorhergehenden Ansprüche, **dadurch gekennzeichnet, dass** der Dichtungsträger (7) in dem Bereich, der den Dichtungsrücken (20) aufnimmt, eine Armierung umfasst.

## Claims

1. Slave cylinder for a hydraulic disengagement system of a friction clutch of vehicles, the slave cylinder having a slave cylinder housing (2) arranged concentrically with respect to a transmission input shaft (34), a guide sleeve (5) being arranged in a longitudinal bore of the pressure housing (2) with a radial spacing so as to form a circular-ring-shaped pressure chamber (9), and an annular piston (6) being guided in an axially movable manner in the pressure chamber (9), which annular piston (6) is provided, at the pressure chamber side, with a seal (8) whose sealing lips (10, 11) are arranged so as to be spread apart radially, **characterized in that** the annular piston (6) has at least one region (36) which reduces the size of an annular gap (23) between the annular piston (6) and housing and/or of an annular gap (24) between the annular piston (6) and guide sleeve when the pressure chamber (9) is pressurized.

2. Slave cylinder according to Claim 1, **characterized in that** the annular piston (6) comprises a piston body (45) and also a seal carrier (7), which is connected thereto, for holding the seal (8), the region which reduces the size of the annular gap (23) between the piston and housing and/or of the annular gap (24) between the piston and guide sleeve when the pressure chamber is pressurized being arranged on the seal carrier (7).

3. Slave cylinder according to Claim 2, **characterized in that** the seal carrier (7) is connected to the piston body (45) in a positively locking manner, in particular by means of a clip connection.

4. Slave cylinder according to Claim 3, **characterized in that** the connection between the seal carrier (7) and piston body (45) has axial and/or radial play.

5. Slave cylinder according to one of the preceding claims, **characterized in that** the seal (8) comprises a seal part (47) which is held in a seal receptacle (13) of the seal carrier.

6. Slave cylinder according to Claim 3, **characterized in that** the seal part (47) comprises a seal foot (13) with means for fixing the seal to the seal carrier (7).

7. Slave cylinder according to Claim 5 or 6, **characterized in that** the seal part (47) comprises a seal back (20) with two substantially axially running surfaces (39, 40).

8. Slave cylinder according to one of the preceding claims, **characterized in that** the seal carrier (7) comprises a reinforcement in the region which receives the seal back (20).

## Revendications

1. Cylindre récepteur pour un système de débrayage hydraulique d'un embrayage à friction de véhicules, dans lequel le cylindre récepteur présente un boîtier de cylindre récepteur (2), qui est disposé concentriquement à un arbre d'entrée de boîte de vitesse (34), un manchon de guidage (5) étant disposé dans un alésage allongé du boîtier de pression (2) de manière radialement espacée en vue de former un espace de pression de forme annulaire circulaire (9), et dans l'espace de pression (9) un piston annulaire (6) étant guidé de manière déplaçable axialement, lequel est pourvu du côté de l'espace de pression d'un joint d'étanchéité (8), dont les lèvres d'étanchéité (10, 11) sont disposées de manière écartée radialement, **caractérisé en ce que** le piston annulaire (6) présente au moins une région (36) qui, dans le cas d'une sollicitation en pression de l'espace de pression (9), réduit une fente annulaire (23) entre le piston annulaire (6) et le boîtier et/ou une fente annulaire (24) entre le piston annulaire (6) et le manchon de guidage.

2. Cylindre récepteur selon la revendication 1, **caractérisé en ce que** le piston annulaire (6) comprend un corps de piston (45) ainsi qu'un support de joint d'étanchéité (7) connecté à celui-ci pour recevoir le joint d'étanchéité (8), la région qui, lors de la sollicitation en pression de l'espace de pression, réduit la fente annulaire (23) entre le piston et le boîtier et/ou la fente annulaire (24) entre le piston et le manchon de guidage, étant disposée sur le support de joint d'étanchéité (7).

3. Cylindre récepteur selon la revendication 2, **caractérisé en ce que** le support de joint d'étanchéité (7) est connecté par engagement par correspondance géométrique, notamment au moyen d'une connexion par enclipsage, au corps de piston (45).

4. Cylindre récepteur selon la revendication 3, **caractérisé en ce que** la connexion entre le support de joint d'étanchéité (7) et le corps de piston (45) est munie d'un jeu axial et/ou radial.

5. Cylindre récepteur selon l'une quelconque des revendications précédentes **caractérisé en ce que** le joint d'étanchéité (8) comprend une partie d'étanchéité (47) qui est reçue dans un logement d'étanchéité (13) du support de joint d'étanchéité.

6. Cylindre récepteur selon la revendication 3, **caractérisé en ce que** la partie d'étanchéité (47) comprend une base d'étanchéité (13) avec des moyens pour fixer le joint d'étanchéité sur le support de joint d'étanchéité (7).

7. Cylindre récepteur selon la revendication 5 ou 6, **caractérisé en ce que** la partie d'étanchéité (47) comprend un dos de joint d'étanchéité (20) avec deux surfaces (39, 40) s'étendant essentiellement axialement.

8. Cylindre récepteur selon l'une quelconque des revendications précédentes, **caractérisé en ce que** le support de joint d'étanchéité (7) comprend un blindage dans la région qui reçoit le dos de joint d'étanchéité (20).
